# FASCICULE DE BREVET EUROPEEN

(11) **EP 2 546 143 B1**
(45) Date de publication et mention de la délivrance du brevet: **18.02.2015**
(21) Numéro de dépôt: 12290227.3
(22) Date de dépôt: 09.07.2012
(51) Int. Cl.: B64D 7/00, F41A 9/25, F41F 3/06, F41F 5/00, F41A 9/38, F41A 9/72

(54) **Système pour lancer des projectiles notamment de contre-mesure à partir d'un aéronef**
Geschützabschusssystem, insbesondere als Gegenmaßnahme von einem Luftfahrzeug aus
System for launching projectiles in particular as a countermeasure from an aircraft

(30) Priorité: 12.07.2011 FR 1102193
(43) Date de publication de la demande: 16.01.2013
(73) Titulaire: MBDA France, 92350 Le Plessis-Robinson (FR)
(72) Inventeur: Rafin, Vincent, 18000 Bourges (FR); Tisseron, Bernard, 58180 Marzy (FR)
(74) Mandataire: Hauer, Bernard

(56) Documents cités:
- WO-A1-02/090867
- US-A1- 2002 117 073

## Description

La présente invention concerne un système pour lancer des projectiles à partir d'un aéronef et plus particulièrement, quoique non exclusivement, des projectiles du type à contre-mesures.

On sait que, pour lutter efficacement contre des engins volants ennemis comme des missiles (voire des engins non volants), les aéronefs tels que les avions de chasse ou autres sont équipés de systèmes de lancement de projectiles destinés, une fois que ces derniers sont lancés, à leurrer ou à détruire ces menaces. En fonction du type de missiles ennemis, l'avion « cible » envoie les leurres appropriés qui peuvent être électromécaniques (à paillettes), électromagnétiques (à brouillage), pyrotechniques (à infrarouge), etc..

Les systèmes connus, par exemple, du type lance-paillettes comportent généralement :
- au moins un tube apte à être fixé à l'aéronef pour la réception en série des projectiles et le lancement de ceux-ci ; et
- un mécanisme de commande pour l'avance et la sortie successive des projectiles hors du tube.

Par exemple, on connaît par le document WO 02/090867, qui est considéré l'état de la technique le plus proche, un tel système de lancement de charges de leurrage de type électromagnétique lesquelles charges sont éjectées directement de tubes de réception liés à l'aéronef.

Aussi, compte tenu des différents types de menaces, plusieurs systèmes spécifiques sont prévus sur l'avion, généralement sous le fuselage et les ailes de celui-ci, lesquels systèmes occupent par conséquent plusieurs emplacements. Cela pénalise alors la capacité d'emport d'autres matériels (armement, réservoir,...) et augmente la masse. De plus, l'éjection des projectiles à partir de ces différents systèmes ne s'effectue pas toujours avec les projectiles directement orientés dans le flux aérodynamique de l'avion, notamment dans le cas de projectiles à cartouches (paillettes, ...), et utilisent généralement des interfaces de tir spécifiques associées respectivement aux projectiles.

La présente invention a pour but de pallier ces inconvénients et concerne un système de lancement de projectiles dont la conception permet d'éjecter tout type de projectiles (à contre-mesures ou autres, à charges explosives par exemple), à partir d'une interface de lancement unique et avec notamment une orientation optimale des projectiles directement dans le flux aérodynamique.

A cet effet, le système de lancement de projectiles, destiné à être monté sur un aéronef et du type rappelé ci-dessus, est remarquable, selon l'invention, par le fait que ledit tube de réception des projectiles est agencé au moins approximativement parallèlement à l'axe longitudinal de l'aéronef, par le fait que lesdits projectiles sont cylindriques et contiennent chacun une charge de leurrage et par le fait que le système comprend, de plus, un module d'éjection des projectiles à passage axial, qui est rapporté fixement dans le prolongement du tube à l'opposé du mécanisme de commande, et est apte à recevoir successivement, par l'action du mécanisme de commande, un projectile issu du tube, ledit module d'éjection présentant une ouverture latérale débouchant dans ledit passage axial et à travers laquelle est éjecté le projectile par un dispositif d'éjection commandable prévu entre le module et le projectile.

Ainsi, par l'agencement du tube sensiblement parallèle à l'axe longitudinal de l'avion et par le module d'éjection à ouverture latérale et à dispositif d'éjection intégré, chaque projectile est éjecté perpendiculairement à l'axe avion en étant directement orienté dans le flux aérodynamique de celui-ci. Par conséquent, le projectile, une fois éjecté du module, se stabilise très rapidement dans le flux puisque l'axe principal du projectile se trouve dans le sens du flux, sensiblement parallèlement à celui-ci, avec moins de traînée et une meilleure stabilisation des leurres.

Par ailleurs, à partir d'un seul système, on peut éjecter via le module formant l'interface de tir unique, tout type de projectiles de contre-mesures, mais également des projectiles à charges explosives ou autres, préalablement logés dans le tube. En conséquence, un tel système permet de limiter l'encombrement sous l'avion, de libérer des emplacements précédemment occupés par les autres systèmes et de réduire la masse.

Le système comprend des berceaux de support pour recevoir respectivement les projectiles dans le tube et le module d'éjection, chacun desdits berceaux étant reçu dans le passage axial du module et étant ouvert latéralement sur toute la longueur du projectile pour être en regard de l'ouverture latérale dudit module avec le dispositif d'éjection prévu entre le berceau et le projectile, ledit berceau, après l'éjection radiale du projectile, étant sorti du passage axial par le mécanisme de commande. Ainsi, le berceau fait office de support et d'éjecteur du projectile, et le mécanisme de commande recharge automatiquement le module par un autre berceau à projectile issu du tube et ayant chassé le berceau précédent vide.

En particulier, lesdits berceaux sont identiques et présentent une forme d'enveloppe cylindrique ouverte latéralement, plusieurs berceaux avec les projectiles étant reçus les uns à la suite des autres dans le tube, tandis qu'un seul berceau avec son projectile est reçu dans le passage axial du module d'éjection à ouverture latérale.

De préférence, le système comporte deux tubes juxtaposés contenant les projectiles alignés et équipés, d'un côté, d'un mécanisme d'avance pour chaque tube et, de l'autre côté, du module d'éjection à deux passages parallèles coaxiaux auxdits tubes respectivement. Ainsi, on peut utiliser un système à lance-paillettes usuel et l'emplacement qu'il occupe, pour le transformer en système de lancement de l'invention sans recourir à des modifications sur l'aéronef.

Par ailleurs, entre chaque berceau et le projectile associé sont prévus un mécanisme de verrouillage du projectile par rapport au berceau, et le dispositif d'éjection commandable du projectile par l'ouverture latérale du module après effacement du mécanisme de verrouillage.

Dans un mode préféré de réalisation, ledit dispositif d'éjection du projectile est du type pyrotechnique et est agencé dans l'un dudit berceau ou dudit projectile pour éjecter radialement le projectile à travers l'ouverture latérale du module. Par exemple, le dispositif d'éjection pyrotechnique est reçu dans une cavité d'un appendice radial issu du fond du berceau selon une direction d'éjection radiale, perpendiculaire audit passage axial du module, et communiquant avec le projectile pour l'éjecter à travers l'ouverture latérale du module.

A titre d'exemple, la direction d'éjection du projectile se trouve dans une plage comprise entre plus ou moins 25° par rapport au plan horizontal de l'aéronef.

Quant au mécanisme de verrouillage, il peut comprendre au moins un doigt de verrouillage déplaçable associant le berceau et le projectile et libérant le projectile du berceau sous l'action des gaz issus du dispositif pyrotechnique lorsque ce dernier est initié.

De plus, entre le berceau et le module d'éjection sont prévus des moyens de maintien en position du berceau avec immobilisations axiale et transversale de celui-ci par rapport au module, conférant à chaque berceau introduit dans le module une même position de référence.

En outre, pour sortir le berceau du module une fois son projectile éjecté radialement, par suite de l'action du mécanisme d'avance, et le remplacer par un autre avec le projectile, un volet escamotable est prévu dans la paroi transversale du module d'éjection, tournée vers l'extérieur.

Par ailleurs, l'ouverture latérale du module d'éjection est obtenue par une paroi latérale de celui-ci qui est déplaçable par un mécanisme d'entraînement prévu dans le module, à la manière d'un rideau roulant.

On prévoit de plus, pour les différentes commandes du système et son fonctionnement, une connectique électrique entre le projectile et le berceau par le biais de connecteurs électriques, et entre le berceau et le module par le biais de contacts télescopiques linéaires à pas variable sur le module, en vis-à-vis de plots conducteurs sur le berceau, avec un circuit souple reliant les plots au connecteur correspondant du berceau.

Aussi, pour participer à leur stabilisation dans le flux, les projectiles comprennent des empennages déployables à travers des fentes des projectiles. Par exemple, une couronne rotative entoure les empennages pour les maintenir en position repliée dans le berceau et, par suite de l'éjection du projectile et sous l'action d'un élément élastique, la couronne tourne pour présenter des ouvertures en regard des fentes et entraîner le passage des empennages de la position repliée à la position déployée.

Les figures du dessin annexé feront bien comprendre comment l'invention peut être réalisée. Sur ces figures, des références identiques désignent des éléments semblables.

La figure 1 est une vue de dessus d'un aéronef équipé d'un système de lancement de projectiles conforme à l'invention.

La figure 2 représente, en perspective partiellement écorchée, un exemple de réalisation du système de la figure 1 avant le lancement d'un projectile.

La figure 3 montre, en perspective agrandie, le module d'éjection du système de lancement.

La figure 4 est une perspective d'un berceau de support d'un projectile.

La figure 5 est une coupe transversale du berceau avec le projectile, montrant le mécanisme de verrouillage entre eux et le dispositif d'éjection du projectile.

La figure 6 représente, en perspective partielle et écorchée, la couronne de maintien des empennages du projectile en position repliée.

La figure 7 représente, en perspective partielle écorchée, la connectivité entre chaque berceau, le projectile associé et le module.

Les figures 8, 9, 10 représentent, en perspective schématique, la séparation et le lancement d'un projectile du berceau correspondant du module, et la sortie du berceau dudit module.

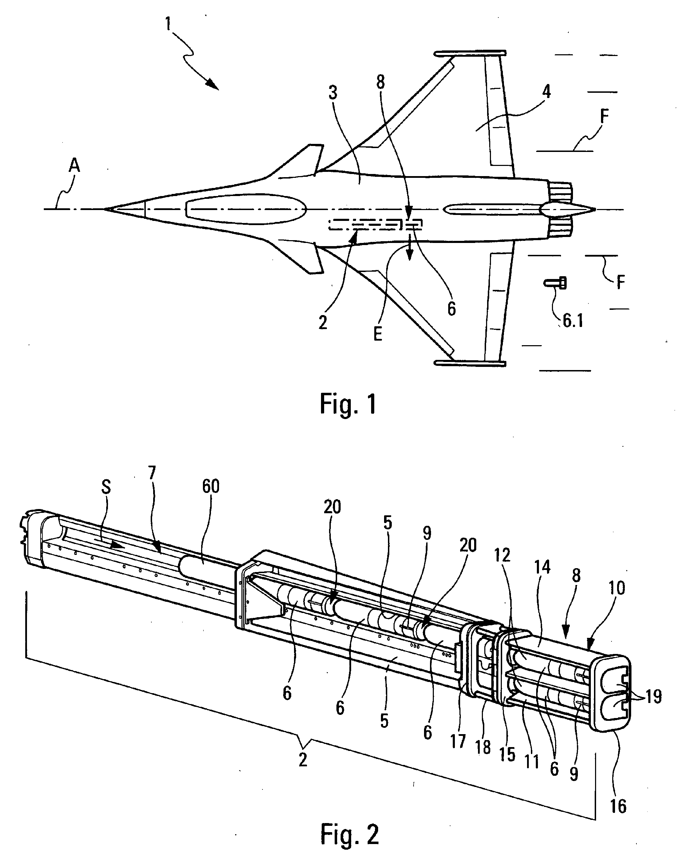

Comme on le voit sur la figure 1, l'aéronef tel qu'un avion de chasse 1 est équipé d'un système de lancement de projectiles 2 schématiquement représenté en trait mixte et fixé, par un cadre-support approprié ou pod non illustré, sous le fuselage 3 de l'avion. L'axe longitudinal A de ce dernier est également indiqué de même que le flux aérodynamique entre l'avion et l'air, symbolisé par des flèches F. Le système 2 n'est pas limité à cet emplacement et pourrait être disposé en tout autre endroit du fuselage, par exemple à l'arrière de celui-ci, ou sous la voilure, comme le montrent les représentations en trait mixte fin sur la figure 1.

Bien qu'ils ne soient pas illustrés, d'autres systèmes de lancement de projectiles notamment de contre-mesure à des fins de leurrer des menaces ennemies, pourraient être également prévus sur les ailes 4 et le fuselage 3 de l'avion 1.

Le système de lancement de projectiles 2 comporte, dans l'exemple de réalisation illustré sur la figure 2, deux tubes cylindriques juxtaposés 5 liés au cadre-support et à l'intérieur desquels sont logés successivement les projectiles 6, des mécanismes de commande 7 pour l'avance des projectiles dans les tubes et, conformément à l'invention, un module d'éjection 8 des projectiles. Et, comme on le voit sur les figures 1 et 2, le système de lancement 2 de forme allongée, imposée par les tubes cylindriques 5 et l'extension des mécanismes de commande 7 et du module 8, est fixé de façon sensiblement parallèle à l'axe longitudinal A de l'avion, et l'éjection de chaque projectile 6 est conçue pour qu'elle soit orthogonale (selon la flèche E) à l'axe A avec le projectile 6 agencé dans le flux aérodynamique F, c'est-à-dire parallèlement à celui-ci comme on le verra ultérieurement.

Lorsque le système 2 est installé sur l'avion, le module d'éjection 8 se trouve à l'arrière ou en aval du système, de sorte que les projectiles sortent du module avec leur nez dans le flux F, tourné vers l'avant de l'avion et les empennages 9 à l'opposé. Un projectile 6.1 précédemment lancé est représenté dans la configuration ci-dessus sur la figure 1.

Avec un tel agencement du système 2 dans l'axe A et une telle éjection orthogonale, le projectile est directement orienté dans le flux aérodynamique F et le module 8 fait office d'interface de tir unique pour l'éjection successive des autres projectiles contenus dans les tubes de stockage 5.

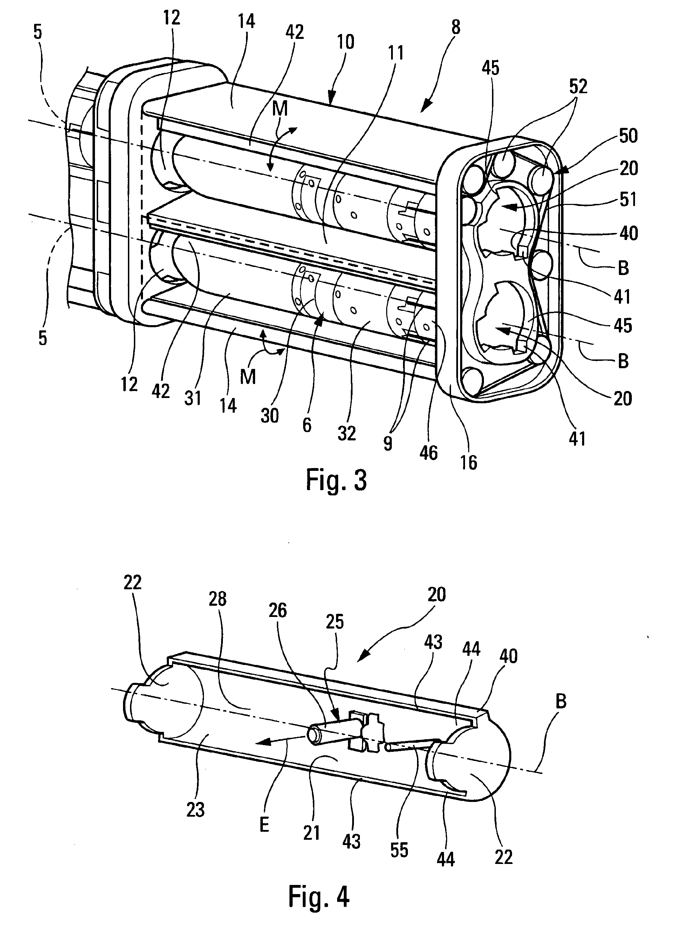

Pour permettre cela, le module d'éjection 8 représenté plus en détail sur la figure 3 comprend un corps 10 qui est rapporté fixement dans le prolongement des deux tubes juxtaposés 5 en ayant alors une forme sensiblement parallélépipédique, correspondante à celle des tubes dans leur cadre-support, et qui présente une ouverture latérale 11 à travers laquelle peuvent être éjectés les projectiles par un dispositif 25 décrit plus tard.

A cet effet, le corps parallélépipédique 10 présente deux passages axiaux, parallèles 12, venant, après fixation du module 8 dans le prolongement coaxial respectif des tubes 5. Ces passages 12 sont entourés d'une paroi latérale 14 qui peut s'ouvrir de manière à découvrir l'ouverture latérale 11 comme on le verra ultérieurement.

Structurellement, le corps 10 se termine par deux parois transversales d'extrémité 15 et 16 dont l'une, 15, est rapportée directement à la paroi transversale en regard 17 terminant les deux tubes, par l'intermédiaire d'entretoises 18, et dont l'autre, 16, termine le module 8 en étant munie de volets articulés mobiles 19. Les deux passages axiaux 12 s'étendent tout du long du corps et communiquent avec les deux tubes 5 d'un côté, et sont obturés, de l'autre côté, par les volets 19. Les entretoises 18 sont notamment destinées à assurer la reprise des efforts d'éjection entre le module et les tubes, tandis que les volets 19 formant trappe sont rappelés spontanément en position de fermeture protégeant l'intérieur du module vis-à-vis de l'environnant extérieur.

Avantageusement, les projectiles 6 sont reçus chacun dans des berceaux individuels 20 lesquels sont montés dans les tubes de stockage juxtaposés 5 et dans le module 8. Dans l'exemple illustré en figure 2, les tubes identiques 5 comprennent chacun trois projectiles agencés en série, et un quatrième projectile est logé dans le passage axial correspondant 12 du module.

Un tel système de lancement 2 comporte donc huit projectiles. Bien évidemment, il pourrait ne comporter qu'un tube ou plus de deux tubes avec des capacités différentes d'emport de projectiles. Le module d'éjection 8 comprend quant à lui un nombre de passages correspondant au nombre de tubes, dans chaque passage 12 étant amené un seul projectile par l'intermédiaire du mécanisme de commande d'avance 7 situé de l'autre côté du tube et qui sera décrit ultérieurement.

Aussi, le berceau de support 20 montré schématiquement sans le projectile sur la figure 4 comprend une enveloppe cylindrique 21 d'axe B, couvrant un secteur angulaire au plus diamétral et terminée par deux parois transversales d'extrémité 22. La distance de séparation entre les deux parois 22 correspond sensiblement à la longueur du projectile 6 entre son nez amont et l'empennage aval, et le diamètre de l'enveloppe de réception 21 correspond au diamètre extérieur du projectile 6 de forme cylindrique. Comme l'enveloppe ne couvre qu'un secteur angulaire inférieur à 180°, le projectile 6 peut être facilement monté par l'ouverture latérale 23 laissée par le berceau et, par suite, être éjecté de celui-ci au travers de l'ouverture latérale 11 du corps du module, comme on le verra plus tard.

Chaque berceau 20 comprend, outre la réception du projectile, plusieurs autres fonctions telles que notamment le maintien et l'indexage du berceau dans le passage correspondant du module et le tube dans une position angulaire appropriée, le verrouillage du projectile dans le berceau, l'éjection du projectile hors du berceau et le verrouillage de la couronne de maintien des empennages en position repliée.

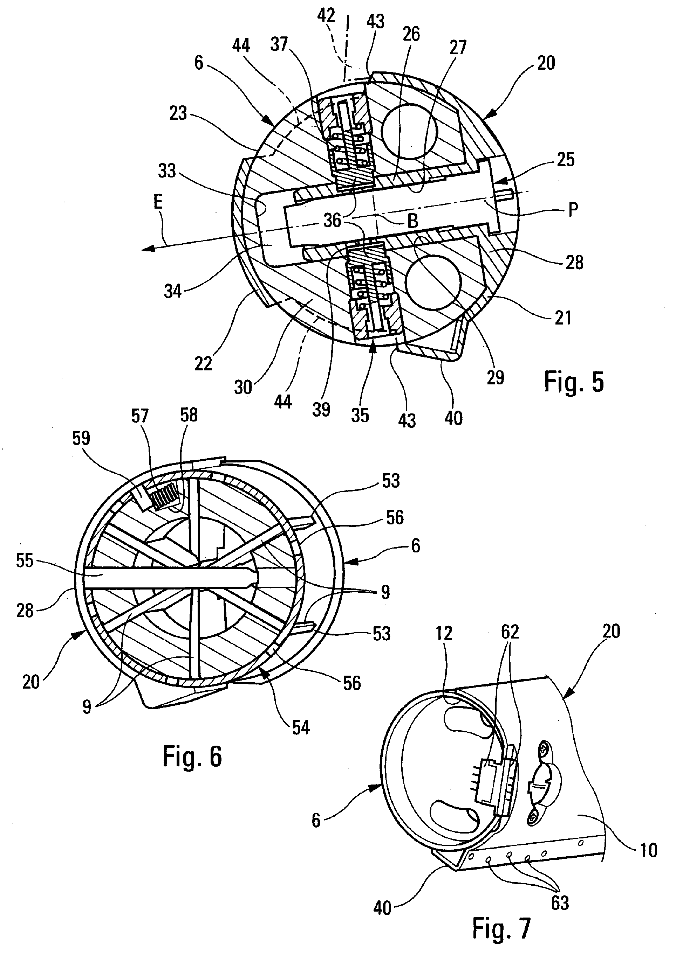

Ainsi, le dispositif d'éjection 25 du projectile est dans l'exemple du type pyrotechnique, commandable et est intégré à chaque berceau 20. Comme on le voit sur les figures 4 et 5, il est logé dans une cavité cylindrique 27 d'un appendice radial (ou excroissance) 26 issu du fond 28 de l'enveloppe et relié électriquement à une commande non représentée. Dans cet appendice saillant 26 s'engage un trou borgne 29 ménagé dans le projectile, en particulier dans une partie médiane 30 de celui-ci comprenant en amont, côté nez, la charge de contre-mesures ou explosives 31, et en aval de la partie médiane 30 à dispositif d'éjection pyrotechnique 25, la source d'énergie 32 (piles ou autres) terminée par la partie aval à empennages 9.

Entre le fond 33 du trou borgne 29 et l'appendice 26 est prévue une chambre de combustion des gaz 34 issus du dispositif pyrotechnique pour permettre l'éjection du projectile selon une direction bien déterminée (flèche E) correspondant à l'axe P de l'appendice cylindrique 26, et qui passe par le centre de l'ouverture latérale 23 du berceau. Pour maintenir le projectile en position sur le berceau 20, tant que le dispositif pyrotechnique 25 est inactif, un mécanisme de verrouillage 35 est prévu. On voit, sur la figure 5, qu'il est composé de deux doigts de verrouillage 36 alignés coaxialement et disposés diamétralement de part et d'autre de l'appendice 26, perpendiculairement à l'axe P. Structurellement, les doigts 36 sont symétriquement soumis à l'action de ressorts 37 en appui, du côté opposé aux doigts, contre des bagues 38 fixées à la partie médiane 30 du projectile. Ces doigts 36 s'engagent ainsi, sous l'action des ressorts 37, dans des évidements 39 prévus dans l'appendice 26 et verrouillent ainsi le projectile 6 dans le berceau 20.

Par ailleurs, comme le montrent les figures 3, 4 et 5, chaque berceau comporte en périphérie une excroissance longitudinale 40, formant languette, qui s'engage dans une rainure de réception correspondante 41 prévue dans le passage axial 12 du module et le tube 5. Ainsi, le berceau et son projectile sont-ils orientés dans la position angulaire appropriée.

Quant au maintien en positions transversale et axiale des berceaux 20 dans le module d'éjection 8, deux rebords parallèles coudés 42 sont prévus le long du corps 10 délimitant les passages axiaux 12, figures 3 et 5, et servent de zones d'appui à chaque bord échancré concerné 43 de l'enveloppe 21 des berceaux, assurant le maintien transversal de ceux-ci perpendiculairement à leur axe longitudinal B.

Concernant le maintien axial, selon cet axe longitudinal, de chaque berceau 20 par rapport au passage axial correspondant 12 du corps, il est obtenu, dans cet exemple, par la différence de formes transversales entre le berceau 20 et le projectile 6, ce qui empêche la sortie axiale du berceau tant que le projectile se trouve dans celui-ci.

En effet, les parois transversales 22 du berceau 20 présentent une forme circulaire avec des échancrures 44 et doivent passer (figures 3, 4, 9), lors de leur introduction dans le passage axial et après l'éjection du projectile comme on le verra ultérieurement, à travers une découpe appropriée correspondante 45 prévue dans les parois transversales 15 et 16 du module (la paroi 16 avec ses découpes 45 est notamment visible sur la figure 3). Or, la section transversale du projectile maintenu entre les deux parois transversales 22, a une forme circulaire qui déborde des échancrures 44 des parois 22 du berceau (comme le montre le trait pointillé des échancrures 44 sur la figure 5) et, donc, de la découpe 45 des parois 15, 16 du corps, si bien que l'arrière du projectile 6 s'applique, par ses endroits qui débordent des échancrures, en butée axiale contre la paroi transversale 16 du corps. Ainsi, tout mouvement axial du berceau 20 par rapport au corps 10 tant que le projectile 6 se trouve dans le berceau, est empêché.

L'éjection du projectile 6 est imposée par l'indexage angulaire préalablement défini et par l'orientation de l'appendice radial 26.

Aussi, dans cet exemple, l'axe d'éjection E (axe P de l'appendice) forme un angle de 20° par rapport au plan horizontal de l'avion de manière à éjecter le projectile sous l'avion. Bien entendu, l'angle pourrait être différent selon le projectile utilisé, l'emplacement du système, etc... et pourrait être compris dans une fourchette de plus ou moins 25° par rapport au plan horizontal avion, au-dessous ou au-dessus du plan.

Par ailleurs, pour limiter les dispersions du projectile lors de l'éjection, il est préférable que le centre de poussée du dispositif pyrotechnique 25 se trouve au centre de gravité du projectile 6 à éjecter.

De plus, comme le montre la figure 3, on voit que la paroi latérale 14 du module est mobile et est ouverte pour présenter les projectiles à éjecter et ainsi définir l'ouverture latérale d'éjection 11. Pour cela, la paroi latérale 14 est déplacée par un mécanisme d'entraînement 50 à courroie-poulies ou chaîne-pignons, ou engrenages 51-52, logé dans la paroi transversale aval 16 du module 8. La commande de ce mécanisme 50 implique, selon le sens donné (flèches M), l'ouverture de la paroi 14 à la manière d'un volet rigide en rotation, pour définir l'ouverture 11 comme sur la figure 3, ou la fermeture de la paroi obstruant l'ouverture 11 tant que le module 8 du système de lancement 2 est inactif. La paroi 14 pourrait être également sous forme d'un rideau souple réalisé en matériau composite et entraîné dans le sens d'ouverture ou de fermeture par des courroies.

Comme les projectiles 6 sont équipés d'empennages 9, il est nécessaire de maintenir ces derniers en position repliée, effacée, lorsque les projectiles sont dans leurs berceaux respectifs 20, ce qui évite les problèmes de frottement dans les tubes, et de libérer les empennages pour qu'ils passent en position déployée dès l'éjection des projectiles 6 pour les stabiliser.

Pour cela, comme le montre la figure 6, les empennages 9 en forme d'ailettes sont, dans cet exemple, au nombre de six (bien entendu, ce nombre pourrait être différent et est au moins égal à deux), régulièrement répartis angulairement autour de la partie arrière circulaire 46 du projectile 6, et sont maintenus en position repliée dans des fentes radiales 53 prévues dans la partie arrière, par une couronne rotative 54 entourant la partie arrière. Cette couronne 54 est immobilisée dans la position illustrée (empennages 9 repliés) par une broche radiale 55 issue du fond 28 de chaque berceau 20 (figures 4 et 6) et parallèles à l'appendice 26 du dispositif pyrotechnique 25. Cette broche 55, lors du montage du projectile, traverse la couronne 54 et la partie arrière du projectile. La couronne présente également des ouvertures 56 qui sont destinées à venir en regard des fentes 53 par suite de la rotation angulaire de la couronne 54 sous l'action d'un ressort 57 prévu radialement entre un évidement 58 de la partie arrière 46 et la couronne, lorsque le projectile 6 est éjecté en ayant quitté la broche 55 et donc le berceau 20.

En ce qui concerne les mécanismes de commande et d'avance 7 des projectiles 6, ils peuvent être du type à piston 60 coulissant dans le tube respectif 5 sous l'action d'une source fluidique commandable en communication avec la chambre du tube 5 et symbolisée par une flèche S sur la figure 2. Ou à moteur électrique (non représenté) avec un système pignon-crémaillère permettant d'assurer la translation dans chaque tube. On remarque la simplicité de réalisation de ces mécanismes qui procurent une fiabilité de fonctionnement importante.

Aussi, lorsque ces mécanismes 7 sont successivement actionnés, pour permettre l'avance des projectiles alignés, le berceau 20 du module 8 à partir duquel a été éjecté le projectile, est chassé du passage axial et traverse le volet formant trappe 19, prévu sur la paroi transversale 16.

Par ailleurs, pour assurer le bon fonctionnement du système et commander l'éjection des projectiles, chaque berceau 20 est équipé d'une connectique électrique. En particulier, comme le montre schématiquement et partiellement la figure 7, une première connexion électrique par connecteurs 62 est prévue entre le connecteur lié au fond 28 de l'enveloppe 21 de chaque berceau, et le connecteur présent sur le projectile notamment pour commander le dispositif d'éjection 25 situé en partie médiane du projectile. Cette connexion est rendue opérationnelle lors du montage du projectile dans le berceau-support 20.

Une seconde connexion électrique est prévue entre chaque berceau 20 et le corps 10 du module. Cette connexion s'effectue à chaque mise en place par coulissement d'un berceau 20 avec le projectile associé dans le passage axial concerné 12 du corps du module d'éjection 8. Et elle permet d'établir la liaison électrique avec les équipements électriques concernés du projectile et de garantir aussi le positionnement correct du berceau dans le module.

Dans cet exemple, la seconde connexion comporte des contacts télescopiques (non visibles sur les figures) prévus dans la paroi du corps 10 du module délimitant chaque passage axial 12 et coopérant avec des points ou plots conducteurs 63 prévus en correspondance sur le berceau, par exemple, le long de l'excroissance longitudinale 40 de chacun d'eux, comme on le voit sur la figure 7. Pour assurer la connexion entre les plots 63 et le connecteur correspondant 62 du berceau, un circuit souple schématisé en 64 est intégré au berceau et relie les plots au connecteur.

On remarque aussi que, comme le « rechargement » des berceaux 20 dans le module 8 s'effectue de façon linéaire, les contacts et les points 63 sont répartis sur plusieurs lignes parallèles et en étant de plus espacés d'un pas variable. Cela permet d'être sûr qu'aucune ligne électrique n'est fermée pendant la translation du berceau dans le passage du module. En position terminale (berceau engagé dans le module), les lignes sont toutes fermées, ce qui du point de vue de la sécurité est essentiel par suite de l'utilisation d'un dispositif d'éjection pyrotechnique.

Le fonctionnement du système de lancement 2 tel que décrit ci-dessus ne soulève pas de difficultés majeures et se déroule de la façon suivante.

On considère, comme le montre la figure 2, que les tubes 5 et les passages axiaux 12 du module d'éjection 8 contiennent les berceaux 20 avec les projectiles 6. Le lancement concerne, par exemple, le projectile 6 situé dans le passage axial 12 qualifié de supérieur, du module 8.

Les différentes connexions sont établies. La paroi latérale mobile 14 du module se déplace sous la commande du mécanisme d'entraînement 50, ce qui découvre l'ouverture latérale 11 comme le montre la figure 3. Bien que, dans la représentation illustrée, la paroi latérale ouverte 14 laisse apparaître les deux projectiles, elle ne pourrait montrer que le projectile supérieur.

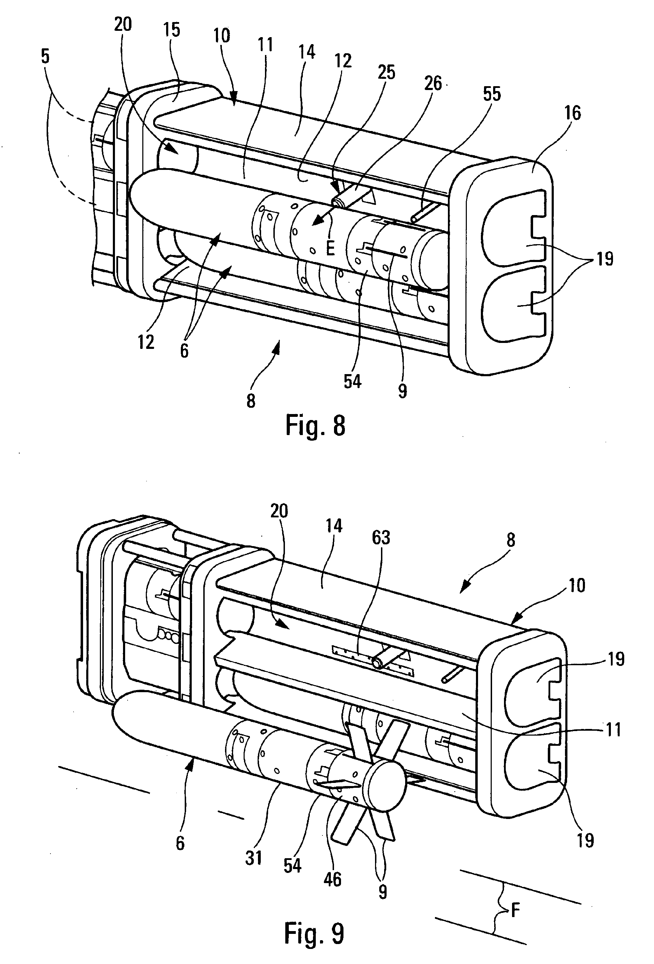

Lors de la mise à feu du dispositif pyrotechnique 25 (figures 5 et 8) sur commande de déclenchement, les gaz de propulsion atteignent la chambre 34 puis les doigts de verrouillage 36 qui sont repoussés hors des évidements 39 de l'appendice radial 26. Cela entraîne la compression des ressorts 37 en appui contre les bagues 38. De la sorte, le projectile 6 est libéré du berceau-support 20 et est éjecté radialement de celui-ci selon la flèche E dont la direction est imposée par l'orientation angulaire choisie de l'appendice 26.

Comme on le voit sur la figure 8, le projectile 6 traverse l'ouverture latérale 11 du module 8 et on remarque également que, simultanément à la sortie du projectile du berceau, se produit la séparation de la couronne de maintien 54 des empennages 9, de la broche radiale 55 issue du fond du berceau 20.

Ainsi, sous l'action du ressort 57 agissant sur l'ergot 59, la couronne 54 tourne angulairement par rapport à la partie arrière 46 du projectile jusqu'à ce que les ouvertures 56 soient simultanément alignées avec les fentes de réception 53 des empennages. Par l'action élastique de ressorts associés aux articulations non illustrées des empennages 9, ces derniers passent spontanément et de façon synchronisée de leur position repliée à leur position déployée, comme le montre la figure 9. Et cela pratiquement dès le lancement du projectile hors du module. Ces mêmes ressorts maintiennent les empennages en position déployée.

Ainsi, par l'agencement des tubes du système 2 sensiblement parallèles à l'axe longitudinal A de l'avion 1 et par le module 8 à ouverture latérale, le projectile 6 à empennages (et par suite tous les autres) est éjecté perpendiculairement à l'axe A tout en étant parallèle à celui-ci, de sorte qu'il se trouve orienté correctement et directement dans le sens du flux aérodynamique F, ce qui lui assure une stabilisation rapide et sûre dans celui-ci. Le projectile éjecté 6 est alors apte à jouer son rôle de contre-mesure pour leurrer la menace détectée.

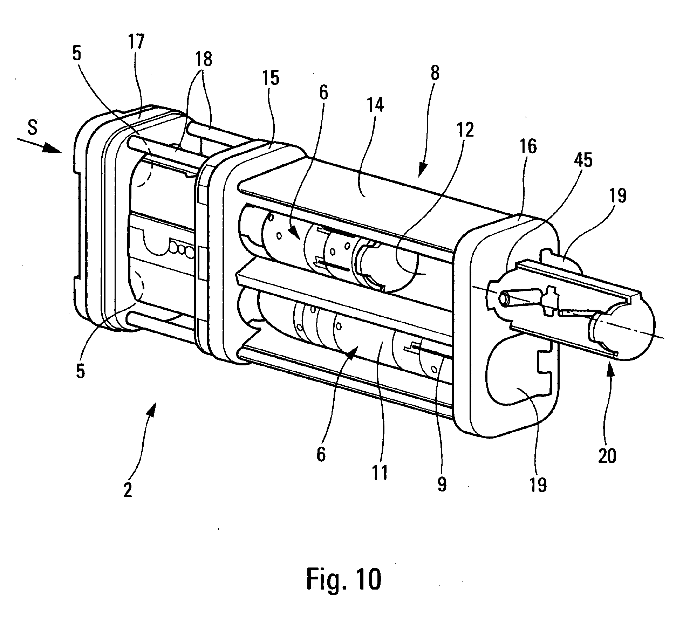

Après l'éjection du projectile se produit celle du berceau-support 20 resté dans le passage axial 12. Pour cela, le mécanisme 7 est actionné, ce qui provoque le coulissement de la série de berceaux alignés 20 dans le tube 5 vers le module 8. Le berceau vide traverse la découpe correspondante 45 de la paroi transversale aval 16 du module et pousse la trappe 19 de celui-ci comme le montre la figure 10. Et cela, jusqu'à ce que le berceau suivant 20 avec son projectile soit totalement reçu dans le passage axial libre 12 du module, avec le projectile venant en butée axiale contre la paroi transversale du corps 10.

Un nouveau tir peut être alors déclenché, toujours à partir du même module qui fait office d'interface de tir commune pour plusieurs projectiles.

## Revendications

1. Système de lancement de projectiles destiné à être installé sur un aéronef et du type comportant :
- au moins un tube (5) apte à être fixé à l'aéronef, pour la réception en série des projectiles (6) et le lancement de ceux-ci, ledit tube de réception (5) des projectiles étant agencé au moins approximativement parallèlement à l'axe longitudinal de l'aéronef, et lesdits projectiles (6) étant cylindriques, et
- un mécanisme de commande (7) pour l'avance et la sortie successive desdits projectiles hors du tube,
lesdits projectiles (6) contenant chacun une charge de leurrage et le système (2) comprenant de plus :
- un module d'éjection des projectiles (8) à passage axial (12), qui est rapporté fixement dans le prolongement du tube à l'opposé du mécanisme de commande, et est apte à recevoir successivement, par l'action du mécanisme de commande, un projectile issu du tube, ledit module d'éjection (8) présentant une ouverture latérale (11) débouchant dans ledit passage axial et à travers laquelle est éjecté le projectile par un dispositif d'éjection commandable (25) prévu entre le module et le projectile, et **caractérisé par**
- des berceaux de support (20) portant respectivement les projectiles (6) dans le tube (5) et le module d'éjection (8), chacun desdits berceaux (20) étant reçu dans le passage axial (12) du module et étant ouvert latéralement sur toute la longueur du projectile pour être en regard de l'ouverture latérale (11) dudit module (8), avec le dispositif d'éjection entre le berceau et le projectile, ledit berceau (20), après l'éjection radiale du projectile, étant sorti du passage axial par le mécanisme de commande (7).

2. Système selon la revendication 1,
**caractérisé par le fait que** lesdits berceaux (20) sont identiques et présentent une forme d'enveloppe cylindrique (21) ouverte latéralement, plusieurs berceaux avec les projectiles associés étant reçus les uns à la suite des autres dans le tube (5), tandis qu'un seul berceau avec son projectile est reçu dans le passage axial du module d'éjection à ouverture latérale.

3. Système selon l'une des revendications 1 ou 2,
**caractérisé par le fait qu'**il comporte deux tubes juxtaposés (5) contenant les projectiles alignés et équipés, d'un côté, d'un mécanisme d'avance (7) pour chaque tube et, de l'autre côté, du module d'éjection (8) à deux passages parallèles (12) coaxiaux auxdits tubes respectivement.

4. Système selon l'une des revendications 1 à 3,
**caractérisé par le fait que**, entre chaque berceau et le projectile associé, sont prévus un mécanisme de verrouillage (35) du projectile par rapport au berceau, et le dispositif d'éjection commandable (25) du projectile par l'ouverture latérale (11) du module (8) après effacement du mécanisme de verrouillage.

5. Système selon l'une des revendications 1 à 4,
**caractérisé par le fait que** ledit dispositif d'éjection (25) du projectile est du type pyrotechnique et est agencé dans l'un dudit berceau ou dudit projectile pour éjecter radialement le projectile à travers l'ouverture latérale du module.

6. Système selon la revendication précédente 5,
**caractérisé par le fait que** le dispositif d'éjection pyrotechnique (25) est reçu dans une cavité (27) d'un appendice radial (26) issu du fond du berceau (20) selon une direction d'éjection radiale perpendiculaire audit passage axial (12) du module, et communiquant avec le projectile pour l'éjecter à travers l'ouverture latérale (11) du module.

7. Système selon la revendication précédente 6,
**caractérisé par le fait que** la direction d'éjection du projectile se trouve dans une plage comprise entre plus ou moins 25° par rapport au plan horizontal de l'aéronef.

8. Dispositif selon l'une des revendications 4 à 7,
**caractérisé par le fait que** le mécanisme de verrouillage (35) comprend au moins un doigt de verrouillage déplaçable (36), associant le berceau (20) et le projectile (6) et libérant le projectile du berceau sous l'action des gaz issus du dispositif pyrotechnique lorsque ce dernier est initié.

9. Système selon l'une des revendications 1 à 8,
**caractérisé par le fait que**, entre le berceau (20) et le module d'éjection (8), sont prévus des moyens de maintien en position avec immobilisation axiale et transversale du berceau par rapport au module.

10. Système selon l'une des revendications 8 ou 9,
**caractérisé par le fait que** la paroi transversale tournée vers l'extérieur du module d'éjection (8) présente un volet escamotable (19) formant trappe et s'ouvrant pour l'éjection axiale du berceau une fois son projectile éjecté radialement, par suite de l'action du mécanisme d'avance.

11. Système selon l'une des revendications 1 à 10,
**caractérisé par le fait que** l'ouverture latérale (11) du module d'éjection (8) est obtenue par une paroi latérale (14) de celui-ci qui est déplaçable par un mécanisme d'entraînement (50) prévu dans le module.

12. Système selon l'une des revendications 1 à 11,
**caractérisé par le fait qu'**une connectique électrique est prévue entre le projectile (6) et le berceau (20) et entre le berceau (20) et le module (8).

13. Système selon la revendication 12,
**caractérisé par le fait que** des connecteurs électriques (62) sont prévus entre le berceau et le projectile, des contacts télescopiques linéaires à pas variable sur le module et des plots conducteurs (63) sur le berceau entre le module et le berceau, avec un circuit souple (64) reliant les plots au connecteur correspondant (62) du berceau.

14. Système selon l'une des revendications 1 à 13
**caractérisé par le fait que** les projectiles comprennent des empennages déployables (9) à travers des fentes (53) des projectiles, une couronne rotative (54) du projectile entourant les empennages pour les maintenir en position repliée dans le berceau et, par suite de l'éjection du projectile et sous l'action d'un élément élastique (57), la couronne tourne pour présenter des ouvertures (56) venant en regard des fentes (53) et entraîner le passage des empennages (9) de la position repliée à la position déployée.

## Patentansprüche

1. System zum Abschuss von Geschossen, das dazu bestimmt ist, an einem Luftfahrzeug installiert zu werden, und von dem Typ ist, welcher aufweist:
- mindestens ein Rohr (5), das geeignet ist, an einem Luftfahrzeug befestigt zu werden, zur Aufnahme der Geschosse (6) nacheinander und zum Abschuss derselben, wobei das Rohr (5) zur Aufnahme der Geschosse wenigstens annähernd parallel zur Längsachse des Luftfahrzeugs angeordnet ist und die Geschosse (6) zylindrisch sind, und
- einen Steuermechanismus (7) zur Vorwärtsbewegung und zum aufeinander folgenden Hinausbewegen der Geschosse aus dem Rohr,
wobei die Geschosse (6) jeweils eine Täuschladung enthalten und das System (2) außerdem umfasst:
- ein Geschossauswurfmodul (8) mit axialem Durchgang (12), das fest in der Verlängerung des Rohres gegenüber dem Steuermechanismus angeordnet ist und geeignet ist, nacheinander, durch die Wirkung des Steuermechanismus, ein aus dem Rohr kommendes Geschoss aufzunehmen, wobei das Auswurfmodul (8) eine seitliche Öffnung (11) aufweist, die in den axialen Durchgang mündet und durch die hindurch das Geschoss von einer steuerbaren Auswurfvorrichtung (25) ausgeworfen wird, die zwischen dem Modul und dem Geschoss vorgesehen ist, und
**gekennzeichnet durch**
- Haltegestelle (20), die jeweils die Geschosse (6) in dem Rohr (5) und dem Auswurfmodul (8) tragen, wobei jedes der Gestelle (20) in dem axialen Durchgang (12) des Moduls aufgenommen ist und auf der gesamten Länge des Geschosses seitlich offen ist, so dass es sich gegenüber der seitlichen Öffnung (11) des Moduls (8) befindet, mit der Auswurfvorrichtung zwischen dem Gestell und dem Geschoss, wobei das Gestell (20), nach dem radialen Auswurf des Geschosses, von dem Steuermechanismus (7) aus dem axialen Durchgang hinausbewegt wird.

2. System nach Anspruch 1,
**dadurch gekennzeichnet, dass** die Gestelle (20) identisch sind und eine Form einer zylindrischen Hülle (21) aufweisen, die seitlich offen ist, wobei mehrere Gestelle mit den zugeordneten Geschossen nacheinander in dem Rohr (5) aufgenommen sind, während ein einziges Gestell mit seinem Geschoss in dem axialen Durchgang des Auswurfmoduls mit seitlicher Öffnung aufgenommen ist.

3. System nach einem der Ansprüche 1 oder 2,
**dadurch gekennzeichnet, dass** es zwei nebeneinander angeordnete Rohre (5) aufweist, welche die ausgerichteten Geschosse enthalten und einerseits mit einem Vorschubmechanismus (7) für jedes Rohr und andererseits mit dem Auswurfmodul (8) mit zwei parallelen Durchgängen (12), die jeweils mit den Rohren koaxial sind, ausgestattet sind.

4. System nach einem der Ansprüche 1 bis 3,
**dadurch gekennzeichnet, dass** zwischen jedem Gestell und dem zugeordneten Geschoss ein Verriegelungsmechanismus (35) zur Verriegelung des Geschosses in Bezug auf das Gestell und die steuerbare Auswurfvorrichtung (25) des Geschosses durch die seitliche Öffnung (11) des Moduls (8) nach Deaktivierung des Verriegelungsmechanismus vorgesehen sind.

5. System nach einem der Ansprüche 1 bis 4,
**dadurch gekennzeichnet, dass** die Auswurfvorrichtung (25) des Geschosses vom pyrotechnischen Typ ist und entweder in dem Gestell oder in dem Geschoss angeordnet ist, um das Geschoss durch die seitliche Öffnung des Moduls hindurch radial auszuwerfen.

6. System nach dem vorhergehenden Anspruch 5,
**dadurch gekennzeichnet, dass** die pyrotechnische Auswurfvorrichtung (25) in einem Hohlraum (27) eines vom Boden des Gestells (20) ausgehenden radialen Fortsatzes (26) aufgenommen ist, der in einer zu dem axialen Durchgang (12) des Moduls senkrechten radialen Auswurfrichtung verläuft und mit dem Geschoss in Verbindung steht, um es durch die seitliche Öffnung des Moduls (11) hindurch auszuwerfen.

7. System nach dem vorhergehenden Anspruch 6,
**dadurch gekennzeichnet, dass** sich die Auswurfrichtung des Geschosses in einem Bereich befindet, der, bezogen auf die horizontale Ebene des Luftfahrzeugs, zwischen plus und minus 25° liegt.

8. Vorrichtung nach einem der Ansprüche 4 bis 7,
**dadurch gekennzeichnet, dass** der Verriegelungsmechanismus (35) mindestens einen verschiebbaren Verriegelungsfinger (36) umfasst, welcher das Gestell (20) und das Geschoss (6) miteinander verbindet und unter der Wirkung der Gase, die von der pyrotechnischen Vorrichtung abgegeben werden, wenn diese ausgelöst wird, das Geschoss aus dem Gestell freigibt.

9. System nach einem der Ansprüche 1 bis 8,
**dadurch gekennzeichnet, dass** zwischen dem Gestell (20) und dem Auswurfmodul (8) Positionshaltemittel mit axialer Fixierung und Fixierung in Querrichtung des Gestells bezüglich des Moduls vorgesehen sind.

10. System nach einem der Ansprüche 8 oder 9,
**dadurch gekennzeichnet, dass** die nach außen gewandte Querwand des Auswurfmoduls (8) eine einklappbare Klappe (19) aufweist, die eine Luke bildet und sich, infolge der Wirkung des Vorschubmechanismus, für den axialen Auswurf des Gestells öffnet, sobald dessen Geschoss radial ausgeworfen worden ist.

11. System nach einem der Ansprüche 1 bis 10,
**dadurch gekennzeichnet, dass** die seitliche Öffnung (11) des Auswurfmoduls (8) durch eine seitliche Wand (14) desselben erhalten wird, welche durch einen in dem Modul vorgesehenen Antriebsmechanismus (50) verschiebbar ist.

12. System nach einem der Ansprüche 1 bis 11,
**dadurch gekennzeichnet, dass** eine elektrische Verbindungstechnik zwischen dem Geschoss (6) und dem Gestell (20) sowie zwischen dem Gestell (20) und dem Modul (8) vorgesehen ist.

13. System nach Anspruch 12,
**dadurch gekennzeichnet, dass** elektrische Verbinder (62) zwischen dem Gestell und dem Geschoss sowie linienförmige Teleskopkontakte mit variabler Schrittweite am Modul und leitende Kontaktstücke (63) am Gestell zwischen dem Modul und dem Gestell vorgesehen sind, mit einer flexiblen Schaltung (64), welche die Kontaktstücke mit dem entsprechenden Verbinder (62) des Gestells verbindet.

14. System nach einem der Ansprüche 1 bis 13,
**dadurch gekennzeichnet, dass** die Geschosse Leitflossen (9) umfassen, die durch Schlitze (53) der Geschosse hindurch ausklappbar sind, wobei ein Drehkranz (54) des Geschosses die Leitflossen umgibt, um sie in der zurückgezogenen Position im Gestell zu halten, und dass sich infolge des Auswurfs des Geschosses und unter der Wirkung eines elastischen Elements (57) der Drehkranz dreht, um Öffnungen (56) den Schlitzen (53) gegenüberliegend zu positionieren und die Bewegung der Leitflossen (9) aus der zurückgezogenen Position in die ausgeklappte Position zu bewirken.

## Claims

1. System for launching projectiles intended to be installed on an aircraft and of the type comprising:
- at least one tube (5) capable of being attached to the aircraft for receiving projectiles (6) in series and launching said projectiles, said tube (5) for receiving projectiles being arranged at least approximately in parallel with the longitudinal axis of the aircraft, and said projectiles (6) being cylindrical, and
- a control mechanism (7) for advancing said projectiles in the tube and successively outputting said projectiles from said tube,
said projectiles (6) each containing a decoy charge, and the system (2) further comprising:
- a module for ejecting projectiles (8) having an axial passage (12) which is rigidly connected in the extension of the tube at the opposite end from the control mechanism and is capable of successively receiving, owing to the action of the control mechanism, a projectile from the tube, said ejection module (8) having a lateral opening (11) which opens into said axial passage and through which the projectile is ejected by a controllable ejection device (25) provided between the module and the projectile, and **characterised by**
- support cradles (20) which support the projectiles (6) in both the tube (5) and the ejection module (8), each of said cradles (20) being received in the axial passage (12) of the module and being open laterally over the entire length of the projectile so as to face the lateral opening (11) in said module (8), the ejection device being between the cradle and the projectile, said cradle (20) being output from the axial passage by the control mechanism (7) after the projectile has been radially ejected.

2. System according to claim 1, **characterised in that** said cradles (20) are identical and are in the shape of a cylindrical envelope (21) that is open laterally, a plurality of cradles together with the associated projectiles being received one after the other in the tube (5), while a single cradle together with its projectile is received in the axial passage of the ejection module having a lateral opening.

3. System according to either claim 1 or claim 2, **characterised in that** it comprises two juxtaposed tubes (5) which contain the projectiles, are aligned and are equipped, at one end, with an advancing mechanism (7) for each tube and, at the other end, with the ejection module (8) having two parallel passages (12) which are each coaxial with said tubes.

4. System according to any of claims 1 to 3, **characterised in that**, between each cradle and the associated projectile, a mechanism (35) for locking the projectile relative to the cradle and the device (25) for controllably ejecting the projectile through the lateral opening (11) in the module (8) after the locking mechanism is retracted are provided.

5. System according to any of claims 1 to 4, **characterised in that** said device (25) for ejecting the projectile is of the pyrotechnic type and is arranged in either said cradle or said projectile in order to radially eject the projectile through the lateral opening in the module.

6. System according to the preceding claim 5, **characterised in that** the pyrotechnic ejection device (25) is received in a cavity (27) in a radial appendage (26) projecting from the bottom of the cradle (20) in a radial ejection direction that is perpendicular to said axial passage (12) of the module, and said device communicates with the projectile in order to eject it through the lateral opening (11) in the module.

7. System according to the preceding claim 6, **characterised in that** the ejection direction of the projectile is in a range of between approximately 25° relative to the horizontal plane of the aircraft.

8. Device according to any of claims 4 to 7, **characterised in that** the locking mechanism (35) comprises at least one displaceable locking finger (36) which connects the cradle (20) and the projectile (6) and releases the projectile from the cradle under the action of the gases originating from the pyrotechnic device when it is initiated.

9. System according to any of claims 1 to 8, **characterised in that**, between the cradle (20) and the ejection module (8), position-maintaining means with axial and transverse immobilisation of the cradle relative to the module are provided.

10. System according to either claim 8 or claim 9, **characterised in that** the transverse wall facing the outside of the ejection module (8) has a retractable flap (19) which forms a trapdoor and opens to axially eject the cradle once its projectile has been radially ejected, owing to the action of the advancing mechanism.

11. System according to any of claims 1 to 10, **characterised in that** the lateral opening (11) in the ejection module (8) is made by a lateral wall (14) of said module which can be displaced by a drive mechanism (50) provided in the module.

12. System according to any of claims 1 to 11, **characterised in that** an electrical connection is provided between the projectile (6) and the cradle (20) and between the cradle (20) and the module (8).

13. System according to claim 12, **characterised in that** electrical connectors (62) are provided between the cradle and the projectile, linear telescopic contacts having a variable pitch are provided on the module and conductive contacts (63) are provided on the cradle between the module and the cradle, a flexible circuit (64) connecting the contacts to the corresponding connector (62) of the cradle.

14. System according to any of claims 1 to 13, **characterised in that** the projectiles comprise fins (9) which can be deployed through slots (53) in the projectiles, a rotatable cap (54) on the projectile surrounding the fins to keep them in the folded position in the cradle and, after the projectile is ejected and under the action of a resilient element (57), the cap turns to line up the openings (56) with the slots (53) and cause the fins (9) to pass from the folded position into the deployed position.
